# EUROPÄISCHE PATENTSCHRIFT

(11) **EP 2 127 795 B1**
(45) Veröffentlichungstag und Bekanntmachung des Hinweises auf die Patenterteilung: **04.07.2012**
(21) Anmeldenummer: 09006771.1
(22) Anmeldetag: 20.05.2009
(51) Int. Cl.: B23K 9/025, B23K 26/24, B23K 33/00

(54) **Schweißverbindung**
Weld connection
Liaison de soudure

(30) Priorität: 28.05.2008 DE 102008025646
(43) Veröffentlichungstag der Anmeldung: 02.12.2009
(73) Patentinhaber: LFK-Lenkflugkörpersysteme GmbH, 86529 Schrobenhausen (DE)
(72) Erfinder: Gruss, Holger, 85653 Aying (DE)
(74) Vertreter: Hummel, Adam

(56) Entgegenhaltungen:
- DE-A1- 3 414 184
- DE-A1- 19 609 722
- DE-C1- 4 040 946
- GB-A- 2 342 608

## Beschreibung

Die Erfindung betrifft eine Schweißverbindung zwischen zwei flachen Bauteilen gemäß dem Oberbegriff des Anspruches 1.

Laserschweißverfahren haben sich bei der Herstellung von Rumpfstrukturen eines Flugzeuges mittlerweile in einigen Bereichen gegenüber dem herkömmlichen Nieten durchgesetzt. Durch die Ausführung einer Schweißnaht werden Fügespalte nicht mehr vorhanden sein. Nietpunktbelastungen können Spannungsspitzen hervorrufen, die Ursache von Rissbeschädigungen und Korrosion von Hautblechen sein können. So hat sich beispielsweise in der Primärstruktur eines Flugzeuges, die aus dem Hautfeld, Stringern, Spannten, Clipse sowie Sitzschienen und Fußbodenquerträgern besteht, das Schweißverfahren durchgesetzt. Die Stringer sind dabei auf der Innenseite des Hautbleches aufgebrachte Längsversteifungen parallel in Flugrichtung. Sie ermöglichen eine Formgebung des Rumpfes und dienen dazu, Luftmassen und Behälterwandkräfte aufzunehmen und weiterzuleiten. Die dabei entstehenden Belastungen sind in erster Linie Längskräfte, die aus einer Biegung um eine Hoch- und Querachse resultieren. Darüber hinaus entstehen jedoch auch zusätzliche Längskräfte aus Kraftein- und umleitung in den Tür- und Fensterbereichen.

Gegenüber den Stringern bilden die Spannten die Querversteifungen eines Flugzeuges. Diese verfügen aufgrund eines hohen Flächenträgheitsmomentes über eine hohe radiale Steifigkeit und bestimmen damit maßgeblich den Rumpfdurchmesser. Dabei sind die Spannten über Clipse mit dem Hautblech indirekt sowie mit den Stringern direkt verbunden. Die Erhöhung der spezifischen Steifigkeit laserstrahlgeschweißter Bauteile ist auf die Realisierung schlankerer Stringergeometrien und geringerer Stringerabstände sowie auf das Entfallen der Stringerfüße zurückzuführen. Unter Last treten an den geschweißten Stringerenden hohe Spannungskonzentrationen auf. Die Kombination aus der zusammenbaubedingten Exzentrizität der Mittelebenen von Hautblech und Stringer, der Lage der Schweißnaht in Nähe der Hautblechmittelebene sowie die Normalspannungen in Stringerlängsrichtungen verursachen an den Stringerenden hohe Biege- bzw. Zugspannungen.

Stringer werden heute beidseitig gleichzeitig auf das Hautblech auf geschweißt. Dazu werden zwei Laserstrahlquellen in einer Ebene quer zur Schweißrichtung gegenüberliegend positioniert. Im Vergleich zum beidseitig nacheinander Schweißen, wird diese Variante in der Serienfertigung von Großraumflugzeugen in einem Arbeitsgang ausgeführt. Aus der Art der Wärmeeinkopplung resultieren symmetrische Spannungsverteilungen im Bauteil und die Vermeidung eines unerwünschten Winkelverzugs des Stringers. Wegen des lokalen beschränkten Wärmeeintrages sind im Gegensatz zu den konventionellen Schweißverfahren die Schweißbadausdehnungen, der Verzug und die Heißrissanfälligkeit kleiner. Das schwierige Handling langer Stringer von bis zu 10 Metern sowie die sphärisch gekrümmten Schalen erfordern den Einsatz eines flexiblen Rollenführungssystems zur Ausrichtung der Stringer. Seitlich montierte Rollen berücksichtigen die Stringertoleranzen und die vertikal angeordneten Andruckrollen ermöglichen die Sicherstellung des technischen Nullspaltes zwischen Stringer und Hautblech. Mit Hilfe eines Schweißzusatzdrahtes werden das Legierungssystem und damit die Eigenschaften des Schmelzbades bzw. des Schweißgutes gezielt beeinflusst. Dabei wird der Schweißzusatzdraht "schleppend", d. h. entgegen der Vorschubrichtung, zugeführt. Da auf dieser Seite des Laserstrahles kein Schmelzbad zur Verfügung steht, wird dieses vom laserinduzierten Plasma bzw. direkt vom Laserstrahl erschmolzen. Die dabei entstehende Kehle übt zusätzlich bei vorliegenden Drahtschwankungen in seitlicher Richtung einen Selbstzentrierungseffekt aus.

Infolge der "starren" Hautblecheinspannung sowie der dreidimensionalen Wärmeableitung im Hautblech liegt das Augenmerk einer solchen Verbindung auf Verformbarkeit und Eigenschaften im Stringer sowie dessen heißrissrelevanten Querverschiebungen. Die nachfolgenden Begriffe Primär- und Sekundärbereich beziehen sich demzufolge stets auf den Stringer.

Bis heute gibt es eine Vielzahl wissenschaftlicher Veröffentlichungen, die die geschweißte Flugzeugrumpfstruktur zum Inhalt haben. Die dort angeführten Betrachtungen werden entweder nur dem Strukturverhalten während des Schweißprozesses oder dem Bauteilverhalten im Flugbetrieb gerecht. Was bei diesen Veröffentlichungen fehlt ist aber das Strukturverhalten in einer Komplexität, die durch die Kombination aus beiden hervorgerufen wird. Es ist deshalb Aufgabe der Erfindung, die Leistungsfähigkeit eines geschweißten Rumpfbereiches aus Aluminium bezüglich seines Betriebsverhaltens und seiner Heißrissneigung zu optimieren.

Das Buch "Handbuch der Schweißtechnick," J. Ruge, Band III, Konstruktive Gestaltung der Bauteile, Springer Verlag, beschreibt (S.241-244, B. 33-50) Längstreiten.

Aus der GB 2 342 608 A ist ein plattenähnlicher, eine bestimmte Dicke aufweisender Schweißträger zum Halten von Komponenten bekannt. Der Träger umfasst zwei T-förmig zueinander angeordnete, miteinander verschweißte Bauteile. Die beiden Bauteile sind mittels einer kontinuierlichen Schweißnaht miteinander verschweißt, wobei ein zu verschweißender Schweißabschnitt zwischen zwei nicht zu verschweißenden Abschnitten angeordnet ist. Zwischen dem Schweißabschnitt und den nicht zu verschweißenden Abschnitten sind Aussparungen im Träger ausgebildet, um während des Schweißens ein Übertritt des Lichtbogens vom Schweißabschnitt zu den nicht zu verschweißenden Abschnitten zu verhindern.

Die Aufgabe wird durch die Merkmale des Anspruches 1 gelöst.

Die Unteransprüche geben dabei eine weitere Ausgestaltung des erfindungsgemäßen Gedankens wieder.

Insgesamt kann gesagt werden, dass die Lösung dieses komplexen Ansatzes darin besteht, einen integralen Ansatz zu schaffen, der eine Ausbildung einer T-förmigen Schweißverbindung im Flugzeug- oder Schiffsbau bei Leichtmetallen bzw. Leichtmetalllegierungen ermöglicht, die bisher nicht möglich waren. Durch einen derartigen integralen Ansatz wird es möglich sein, die bis heute als schweißkritisch geltenden Aluminiumlegierungen im Flugzeugbau oder dergleichen schweißtechnisch verbauen zu können. Dabei wird die Umsetzung des integralen Ansatzes mit der bestehenden Anlagetechnik mit einer Serienanfertigung weiter verfolgt. So ist unter Beibehaltung der Schnittstellenkonfiguration zu genieteten Nachbarsegmenten der Aufwand hinsichtlich der entstehenden Kosten und der Qualifizierung gering. Bei dem integralen Ansatz wird beispielsweise ein Stringer durch jeweils eine Aussparung an seinen Endbereichen modifiziert. Somit ist der Stringer über drei Bereiche mit einem Hautblech schweißtechnisch verbunden.

Dabei werden die äußeren Bereiche als Sekundärbereiche benannt und der Bereich zwischen den beiden Aussparungen als Primärbereich bezeichnet.

In Bezug auf das Betriebsverhalten wird aufgrund der an den Enden vorhandenen Sekundärbereiche die Kerbwirkung in den Außenbereichen des Primärbereiches reduziert. Dabei führen die Sekundärbereiche in den Anfängen des Primärbereiches zu einer Verringerung der Exzentrizität zwischen Hautblech und Stringer. Dieses hat zur Folge, dass es zu einer lokal höheren Steifigkeit kommt. Gleichzeitig wird auf diese Weise im jeweiligen Anfangsbereich des Primärbereiches die Kerbbeanspruchung herabgesetzt. Dabei wird schweißtechnisch die hohe Kontraktionsfähigkeit von Aluminium genutzt, indem vor dem Fügen des äußeren Primärbereiches der innere Primärbereich und der Sekundärbereich verschweißt werden. Mit einer beginnenden Abkühlung kontrahieren die erhitzen Werkstoffbereiche und bewirken durch eine Überlagerung in dem bis dahin noch ungeschweißten äußeren Primärbereich Druckeigenspannungen. Während einer weiteren anschließenden Teilschweißung wirken diese Druckeigenspannung der Werkstoffausdehnung entgegen. Durch ein solches Verfahren werden die kontraktionsbedingten Zugspannungen auf ein Zweiphasengebiet sinken und gleichzeitig eine Heißrissresistenz erhöht.

In den Sekundärbereichen werden Heißrisse und infolgedessen auch deren differenzielles und sequenzielles Versagen in Stringerlängsrichtung toleriert. Da Primärbereich zu jeder Zeit in der Lage sein muss, die auf den Stringer wirkende Gesamtbelastung in der Flugphase aufzunehmen. Um aber die Funktionssicherheit des gesamten Primärbereiches zu gewährleisten, ist es wichtig, dass dessen äußere Randbereiche heißrissfest sind. Dabei stellen im Vergleich zu dem Primär- die Sekundärnähte keine zwingend tragenden Fügeverbindungen dar, da in ihnen Heißrisse und damit deren Versagen toleriert wird. Versagen diese jedoch, so steigen in dem Anfangsbereich der Primärverbindung die Kerbspannung aufgrund der sich ändernden Strukturverhältnisse an.

Im Stand der Technik hat es sich erwiesen, dass die Beherrschung und Optimierung einer Schweißnahtgeometrie an den Nahtenden äußerst schwierig ist. Gerade in diesen Randbereichen ist der Tiefschweißprozess instationär. Dabei führen insbesondere die spezifischen Erstarrungsprozesse im Nahtanfang und - ende zu unterschiedlichen Nahtgeometrien und damit zu unterschiedlichen Kerbfällen. Hinzu kommt, dass zeitliche und örtliche Abweichungen der Erstarrungsverhältnisse in der Schweißzone durch minimale Schwankungen in der Interaktion zwischen Strahlfreigabe/-abschaltung, Drahtzuführung/-abschaltung sowie der Stringerposition längs und quer zur Schweißrichtung hervorgerufen werden. Ferner erschweren Änderungen in der chemischen Zusammensetzung des Schweißgutwerkstoffes gegenüber einem bekannten Grundwerkstoff die Wiederholungsgenauigkeit.

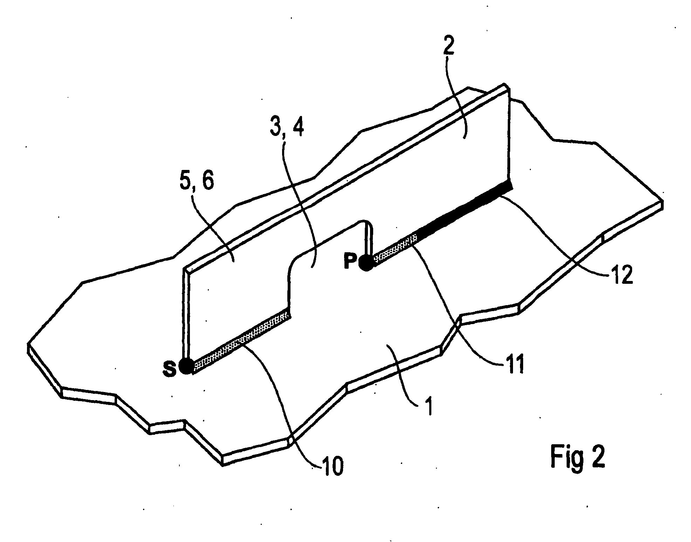

Weder die Länge des Sekundärbereiches, noch die Breite der Aussparungen spielen für die Kerbbelastungen am Anfang des Primärbereiches und am Anfang des Sekundärbereiches eine Rolle. Jedoch würde in dem Fall, wenn der Sekundärbereich versagt, dann innerhalb des Anfanges des Primärbereiches (vgl. Punkt P in Fig. 2) die Kerbspannungen steigen.

Während sich die Breite der Aussparungen nicht auf das Verhalten der Kerbspannung auswirkt, ist eine Änderung der Aussparungshöhe sehr signifikant, da dadurch die Kerbspannungen sich an den Anfängen des Primär- und Sekundärbereiches ändern.

Da sichergestellt sein muss, dass bei einem Versagen der Sekundärbereiche die Primärnaht die gesamte Last aufnehmen muss, muss in deren Außenbereichen die Heißresistenz erhöht werden. Dieses gelingt durch eine geeignete Schweißfolge und durch die geometrische Optimierung der Aussparungen.

Es wird zunächst die innere Primärschweißnaht und anschließend die Sekundärnaht verschweißt, wonach erst dann eine äußere Primärnaht verschweißt wird. Mit der Erstarrung und Abkühlung kontrahieren beide Nahtvolumina sowie die angrenzenden Stringerbereiche oder dergleichen.

Die Erfindung wird nachfolgend anhand der in den Zeichnungen schematisch dargestellten Ausführungen näher erläutert.

Es zeigt:
- **Figur 1:**: Eine Verbindung zwischen einem Stringer und einem Hautblech, mit an den Enden vorhandenen Aussparungen in dem Stringer;
- **Figur 2:**: einen Endausschnitt eines Stringerbereiches mit einem Hautblech;
- **Figur 3:**: eine Darstellung, welche die Druck- und Zugspannungen vor dem Schweißen der äußeren Primärnaht im Stringer wiedergibt;
- **Figur 4:**: ein Diagramm der Druckeigenspannungen im Anfangsbereich der Primärnaht vor dem Schweißen der äußeren Primärnaht (oder vor der dritten Teilschweißung);

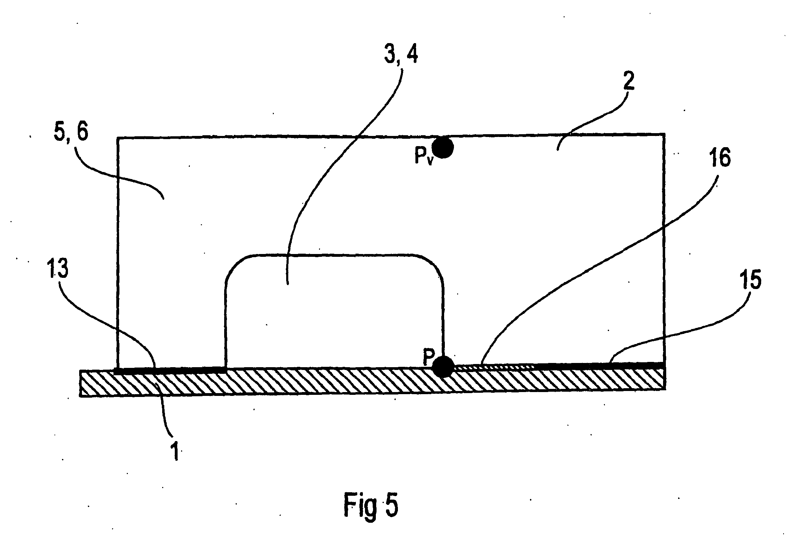

- **Figur 5:**: eine Ausschnittdarstellung eines Stringerendes;
- **Figur 6:**: eine Darstellung der Einflussgrößen, die das Heißrissverhalten am Anfang der Primärnaht bestimmen;
- **Figur 7:**: ein Diagramm zu den auftretenden Querverschiebungen;
- **Figur 8:**: den Einfluss der Stringergeometrie auf die Querverschiebungen in den Nahtanfangsbereichen;
- **Figur 9:**: den Einfluss der Länge des Sekundärbereiches auf die Eigenspannungen am Anfang der Primärnaht nach der zweiten Teilschweißung;
- **Figur 10:**: den Einfluss der Länge des ungehefteten äußeren Primärnahtbereiches;
- **Figur 11:**: den Einfluss des Ansteigens der Länge und der Höhe der Aussparungen und der Schmelzbadlänge auf die Eigenspannungen am Anfang des Primärbereiches nach der zweiten Teilschweißung;
- **Figur 12:**: den Einfluss der Schweißrichtung der inneren Primärnaht auf die Eigenspannungen am Anfang der Primärnaht nach der zweiten Teilschweißung;

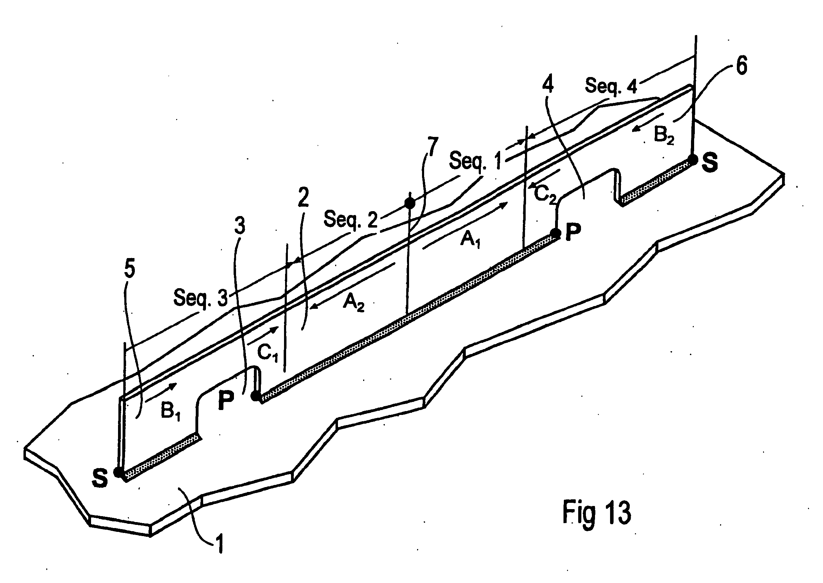

- **Figur 13:**: eine Empfehlung der Schweißfolge und Vorschubrichtungen für einen gesamten Stringer.

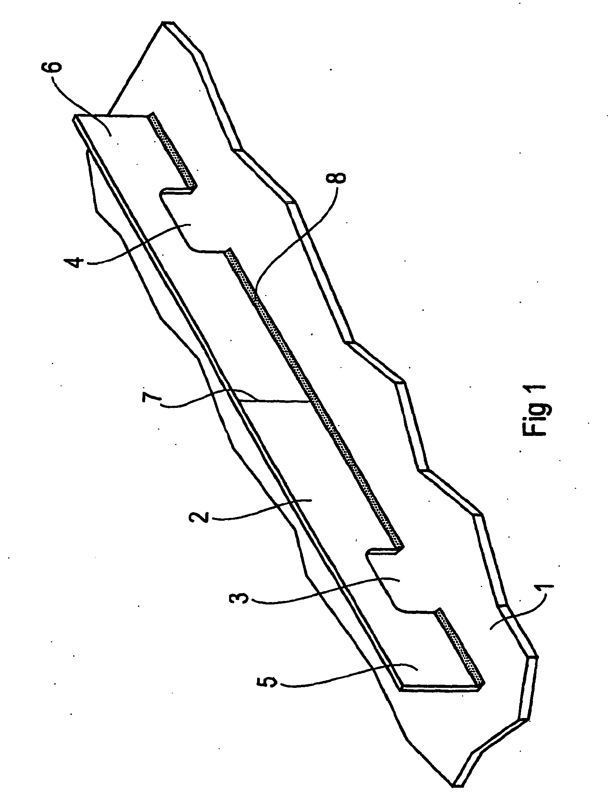

Die Figur 1 gibt eine schematische Darstellung eines ersten Bauteiles 1, das als Hautblech eines Flugzeugrumpfes ausgebildet ist, auf dem in senkrechter Art und Weise ein zweites Bauteil 2, das einen Stringer darstellt, wieder. Der Stringer 2 ist in seinen Endbereichen 5 und 6 mit Aussparungen 3 und 4 versehen. Eine Bauteilmitte des Stringers 2 ist mit 7 bezeichnet. Die Verbindung zwischen dem ersten Bauteil 1 und dem zweiten Bauteil 2 ist in Bereichen 5, 6, 7 des Bauteiles 2 durch eine Heftnaht 8 mit dem ersten Bauteil 1 formschlüssig verbunden.

Den integralen Ansatz der Erfindung kennzeichnet jeweils eine Aussparung 3, 4 am Ende des zweiten Bauteiles 2, und zwar jeweils vor den Endbereichen 5 und 6. Dieses kann der Figur 2 entnommen werden, bei der auch gleichzeitig die zur Definition notwendigen Bereiche eines inneren Primärbereiches 12 sowie eines äußeren Primärbereiches 11 und ein mit 10 bezeichneten Sekundärbereich wiedergibt. Dabei befindet sich der äußere Primärbereich 11 vor dem inneren Primärbereich 12 und wird durch einen Schnittpunkt P, der jeweils am Anfang der Aussparung 3, 4 sich befindet, begrenzt. Der Sekundärbereich 10 liegt in den Endbereichen 5, 6 des zweiten Bauteiles 2 und somit nach den Aussparungen 3, 4. Dabei bildet ein Schnittpunkt S das Ende des zweiten Bauteiles 2, das als Stringer im Flugzeugbau bezeichnet werden kann.

Im Gegensatz zu den meisten Schweißapplikationen ist bei dem vorliegenden integralen Ansatz die hohe Volumenkonzentration des Aluminiums in Folge der Erstarrung und Abkühlung erwünscht.

Es muss sichergestellt sein, dass bei einem Versagen des Sekundärbereiches 10, d. h. der Sekundärbereich 10 würde abreißen, eine dahinter befindliche Primärnaht 16 die gesamte Last aufnehmen muss. Dieses setzt jedoch voraus, dass in dem Schnittpunkt P eine hohe Heißrissresistenz vorhanden sein muss, die ein Unterbinden der Heißrisse beim Schweißvorgang gewährleistet. Dieses gelingt durch eine geeignete Schweißfolge und durch die geometrische Optimierung der Aussparungen 3, 4.

Es sei darauf hingewiesen, dass stets eine Heftung zwischen dem ersten Bauteil 1 und dem zweiten Bauteil 2 zur genauen Positionierung der Bauteile 1, 2 zueinander erfolgt.

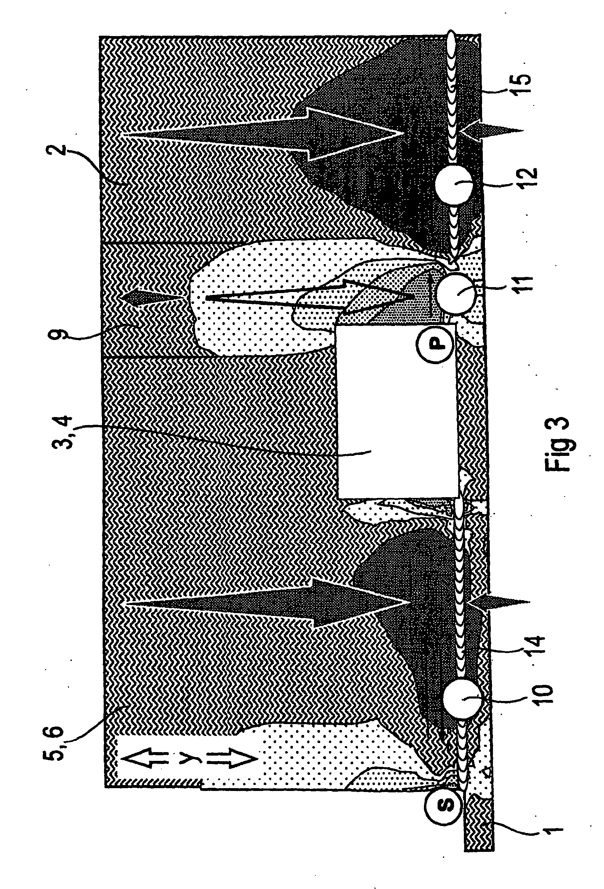

Da die Schweißfolge einen ganz entscheidenden Einfluss auf die Heißrissresistenz ausübt, wird zunächst eine innere Primärteilnaht 15 und anschließend eine Sekundärnaht 14 verschweißt. Mit der Erstarrung und Abkühlung kontrahieren diese beiden Nahtvolumina sowie gleichzeitig auch die angrenzenden Stringerbereiche. Dieses kann aus der schematischen Darstellung der Wirkeigenschaften, basierend auf Druck- und Zugeigenspannungen im zweiten Bauteil 2 quer zur Schweißrichtung aus den ersten beiden Teilschweißungen dem Diagramm der Figur 3 entnommen werden.

Dabei erreichen in beiden Teilnähten die Zugspannungen in Y-Richtung ihren Maximalwert und nehmen mit zunehmender Bauteilhöhe 2 ab. In diesem Falle ist es jedoch entscheidend, dass beide Zugspannungsgebiete durch eine so genannten Brücke 9 miteinander verbunden sind. Die Brücke 9 führt zu einem Niederdrücken des "kalt" gebliebenen, noch ungeschweißten äußeren Primärbereiches 11 mit dem ersten Bauteil 1. Auf diese Weise werden in dem Bereich der Brücke 9 Druckeigenspannungen erzeugt.

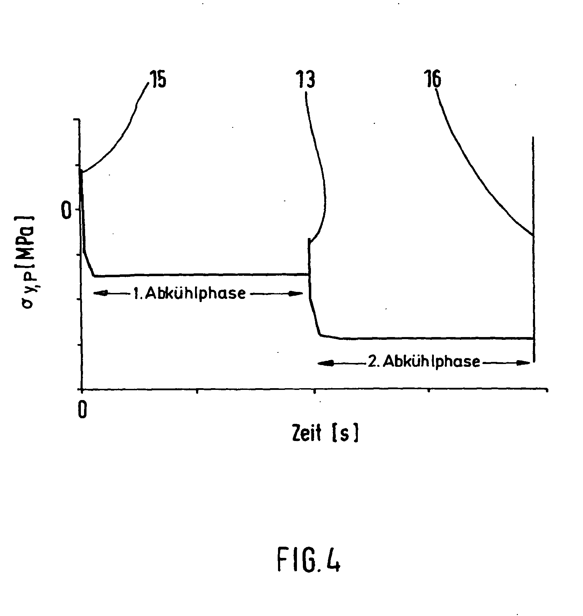

Das Diagramm der Figur 4 gibt die resultierenden Druckeigenspannungen im Schnittpunkt P nach den ersten beiden Teilschweißungen (innere Primärteilnaht 15 und Sekundärnaht 14) wieder.

Im anschließenden dritten Vorgang der einen Teilschweißung, nämlich der äußeren Primärteilnaht 16, wird durch die Induzierung thermischer Spannungen der Grundwerkstoff stark erhitzt und versucht somit zu expandieren. Neben dem kälteren Werkstoff des zweiten Bauteiles 2 in der Umgebung, behindert nun zusätzlich auch die Druckzone eine Volumenausdehnung. Je nach Höhe der vorhandenen lokalen Druckeigenspannungen in diesem zweiten Bauteil 2 herrscht dann im Schnittpunkt P eine niedrigere Zug- oder gar eine Druckbeanspruchung. Somit ist gegenüber einem herkömmlichen Nahtanfang bzw. -ende die Beanspruchung im Schnittpunkt P des zweiten Bauteiles 2 kleiner und die Heißrissneigung geringer. Man kann hierbei von einem so genannten Klammereffekt sprechen, da der dritte Nahtbereich (äußere Primärteilnaht 16) von zwei, über die Brücke 9 verbundene Zugspannungsbereiche, nämlich der inneren Primärteilnaht 15 und der Sekundärnaht 16 umgeben ist. Es ist jedoch Bedingung für den Einsatz dieser Methode, dass die Zulässigkeit eines überschweißten Endkraters im Bereich der inneren Primärnaht 15 beim Erzeugen der dritten Teilnaht (äußere Primärnaht 16) zugelassen wird.

Nachfolgend sollen verschiedene Einflussgrößen auf das Heißrissverhalten im äußeren Primärbereich 11 noch untersucht werden. Diese Einflussgrößen lassen sich entweder als Geometrieparameter oder als Richtungsvektor darstellen. Zu dieser Untersuchung werden die Abmaße der Aussparungen 3, 4 hinsichtlich ihrer Höhe und Länge festgelegt, um eine von den Schweißradien ausgehende Kerbwirkung von vornherein zu unterbinden. Ebenfalls wird die Länge des Sekundärbereiches Iₛ festgelegt. Um die Anforderungen an die Systemgenauigkeit der Anlagentechnik so klein wie möglich zu halten, wird der Bereich der äußeren Primärteilnaht 16 ebenfalls festgelegt, die etwa einer zweifachen Schmelzbadlänge entspricht.

Zu Beginn des Schweißprozesses befindet sich vor und hinter dem Einkopplungsort des Laserstrahles jeweils ein Heftnahtverbund. Das zweite Bauteil 2 ist daher in Längsrichtung beidseitig fixiert und kann den in Folge des Wärmeeintrags entstehenden Druckspannungen bzw. die aus der Erstarrung resultierenden Zugspannungen besser entgegenwirken. Die äußere Zone des Sekundärbereiches 10 stellt die Außenkante des zweiten Bauteiles 2 dar. In Folge der quasi nur einseitigen Bauteil 2 Einspannung erreichen die Querverschiebungen dort ihren maximalen Wert. Somit ist an dieser Stelle die Heißrisswahrscheinlichkeit auch am Höchsten.

Die äußere Primärteilnaht 16 ist, wie die Sekundärnaht 14, im engeren Sinne nur in Schweißrichtung eingespannt. Es fallen jedoch die Querverschiebungen hier wesentlich geringer aus, da oberhalb der Aussparungen 3, 4 die Materialbrücke 9 vorliegt und somit eine höhere Steifigkeit erzielt wird. So wird durch die Überlagerung beider Zugspannungsgebiete links und rechts von den Aussparungen 3, 4 ein den thermisch induzierten Druckspannungen entgegengerichtetes Druckeigenspannungsgebiet aufbauen.

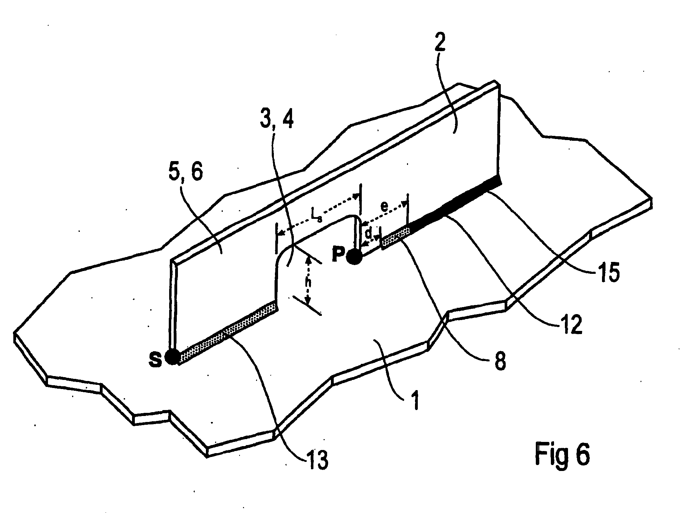

In der Figur 6 ist zur besseren Verständlichkeit noch einmal das Bauteil 2 durch eine Heftnaht 8 im Primärbereich 12 mit dem ersten Bauteil 1 verbunden. Ferner ist der Figur 6 die Angabe von Schweißrichtungen A, B und C zu entnehmen. Wobei die Schweißrichtung A die Richtung für die innere Primärteilnaht 15 darstellt. Der sich anschließende äußere Bereich der Primärteilnaht 16 wird durch die Schweißrichtung C bestimmt. Ferner ist angegeben, dass zu dem Schnittpunkt P in einem Abstand d die Heftnaht 8 vor dem Schnittpunkt P aufhört.

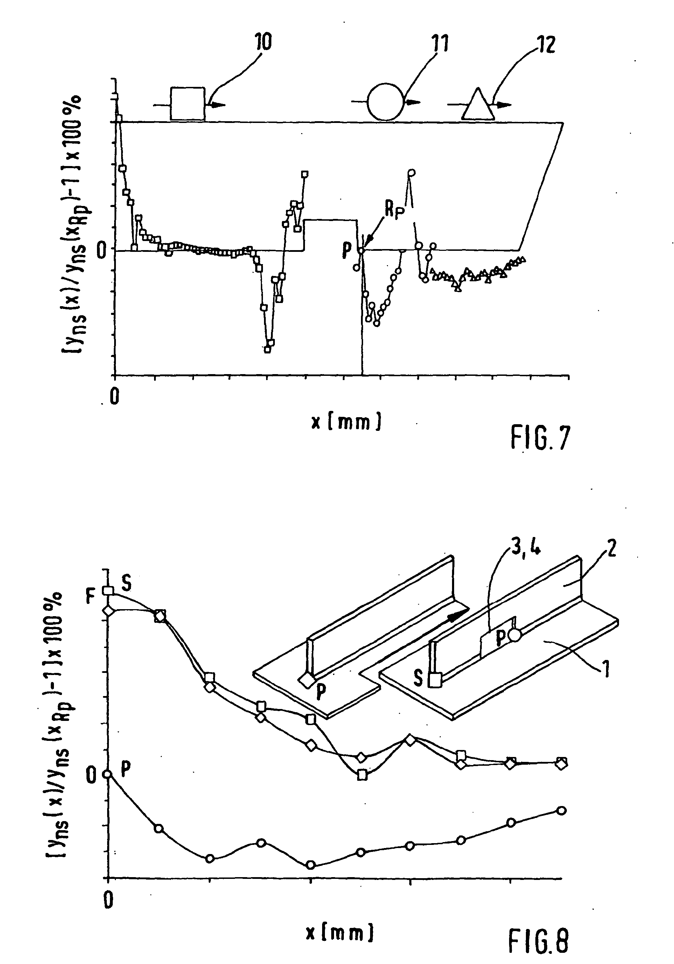

Die Zusammenhänge hinsichtlich der Querverschiebungen können aus dem Diagramm der Figur 7 entnommen werden, wo die auftretenden Querverschiebungen in dem Punkt 10 (Sekundärbereich 10 sowie im äußeren Primärbereich 11 und im inneren Primärbereich 12) untersucht worden ist.

Den grundsätzlichen Einfluss der Geometrie des zweiten Bauteiles 2 auf die Querverschiebungen in den Nahtanfangsbereichen zeigt eine Darstellung der Figur 8. Es zeigt sich, dass die Querverschiebungen in einem Punkt F, welches eine Ausführung der verbundenen Bauteile ohne Aussparung 3, 4 darstellt, wesentlich höher sind. Aufgrund der einseitigen Einspannungen ist die Steifigkeit des zweiten Bauteiles 2 in den Endbereichen 5, 6 wesentlich kleiner. Dementsprechend erreicht dort die Querverschiebung ihre größten Maximalwerte.

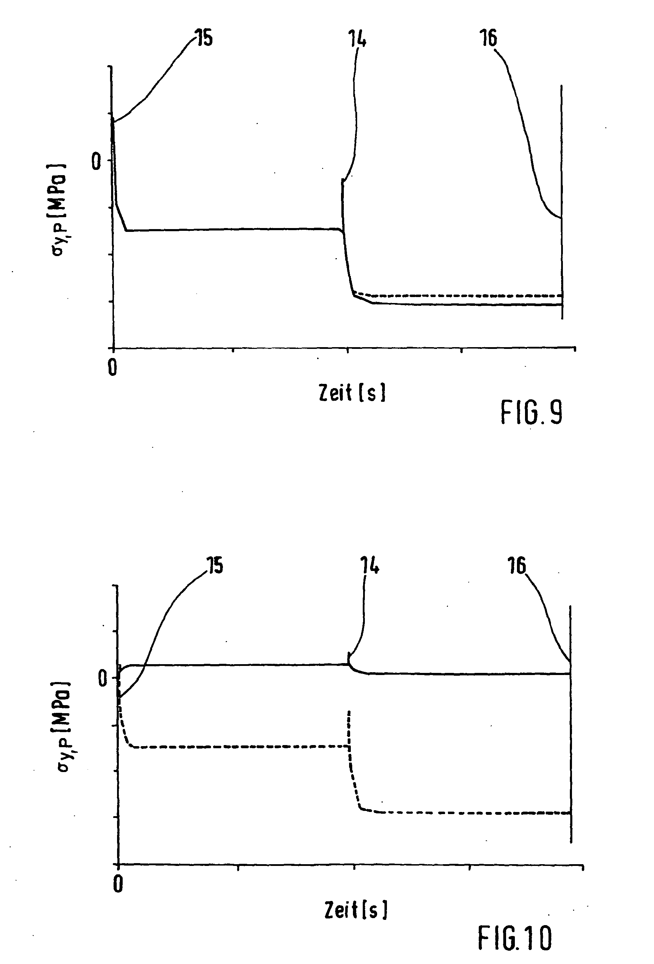

Aus der Gegenüberstellung der Kennlinienverläufe für die Außenbereiche beider Geometrien der miteinander verbundenen Bauteile 1, 2 (mit und ohne Aussparung 3, 4), dass weder die Aussparungen 3, 4, noch die aus der zuvor erzeugten inneren Primärteilnaht 15 resultierenden Eigenspannungen einen signifikanten Einfluss auf die Querverschiebungen im Außenbereich der Sekundärnaht 11 und damit im Schnittpunkt S haben. In beiden Fällen sind die Querverschiebungen nahezu gleich groß. Es hat sich gezeigt, dass eine Verlängerung des Sekundärbereiches 10 nur unwesentlich zu einer Erhöhung der Druckeigenspannungen im Schnittpunkt P führen. Dieses kann der Figur 9 entnommen werden. Es liegt also nahe, dass ab einer bestimmten Sekundärteillänge 10 eine Sättigung des Druckeigenspannungsaufbaues im bis dahin ungeschweißten äußeren Primärbereich 16 vorliegt. Denn je länger der Sekundärbereich 10 ist, desto länger ist auch ein Hebelarm, der aus der Anbindung des Anschlusses am zweiten Bauteil 2 resultiert. Versagt dieser Bereich jedoch, dann steigen die Kerbspannungen im Schnittpunkt P an.

So kann der Figur 10 entnommen werden, dass der Einfluss der Strecke d auf die Eigenspannungen im Schnittpunkt P nach der zweiten Teilschweißung keine oder nur unzureichende Druckeigenspannungen ausbildet. Der Kurvenverlauf zeigt dieses deutlich.

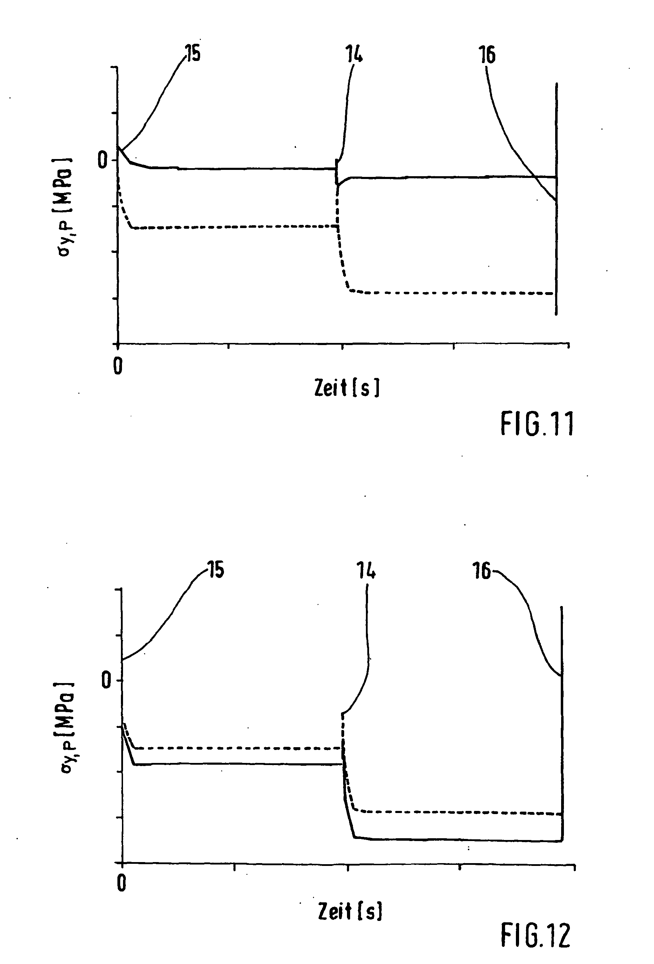

Wird eine gleichzeitige Änderung mehrere Parameter wie die Länge I der Aussparungen 3, 4 und die Höhe h der Aussparungen 3, 4 vorgenommen, so führt dieses im Schnittpunkt P zu einer Abnahme der Steifigkeit. Der innere Primärsowie der Sekundärbereich 15, 14 interferieren nur unzureichend und können somit praktisch nicht als Niederhalter fungieren. So zeigt sich der Einfluss des Ansteigens der Parameter I und h und des Abstandes e auf die Eigenspannungen im Schnittpunkt P nach der zweiten Teilschweißung in der Figur 11. Aufgrund einer ungünstigen Kraftübertragung sind bei Bezugseigenspannungsgebiete kaum in der Lage, im äußern Primärteilnahtbereich 16 im Schnittpunkt P Druckeigenspannungen zu indizieren.

Es hat sich jedoch gezeigt, dass die Druckeigenspannungen in dem Schnittpunkt P ansteigen, wenn sich die Schweißrichtung zur Erzeugung der inneren Primärteilnaht 15 ändert. Durch die Verlegung des Nahtauslaufs der inneren Primärteilnaht 15 an die Grenze zur äußeren Primärteilnaht 16, ist in dieser Zone der Wärmestau im zweiten Bauteil 2 und dem Schmelzbad voll ausgebildet. Dadurch wird ein höheres Werkstoffvolumen entweder umgeschmolzen oder stark erhitzt. Mit der anschließenden eintretenden Abkühlung kontrahiert der Werkstoff und es bauen sich im äußeren Primärbereich 11 größere Druckeigenspannungen auf. Die Erhöhung der Druckeigenspannungen bewirkt sogar eine Stauchung des Zweiphasenverbundes im heißrisskritischen Bereich des Schnittpunktes P und damit definitionsbedingt eine Heißrissunterdrückung. Der Einfluss der Schweißrichtung der inneren Primärnaht 15 auf die Eigenspannungen im Schnittpunkt P nach der zweiten Teilschweißung kann dem Diagramm der Figur 12 entnommen werden.

Es leitet sich deshalb aus der vorangegangenen schweißtechnischen Analyse ein Schweißprozess ab, der aus vier aufeinander folgenden Teilsequenzen besteht. Diese ergeben sich ausschließlich durch eine Änderung der Schweißrichtung.
- Sequenz 1:: Die Schweißung beginnt in der Bauteilmitte 7 und wird als innere Primärteilnaht 15 ausgeführt und endet in dem Abstand e vor dem Schnittpunkt P der Aussparung 3 im Bauteilendbereich 5 des Bauteiles 2.
- Sequenz 2:: Die Vorschubrichtung dieses Schweißvorganges ist nun entgegengesetzt und beginnt ebenfalls in der Bauteilmitte 7 und endet in dem Abstand e vor der Innenkante der Aussparung 4 im Endbereich 5 des zweiten Bauteiles 2.
- Sequenz 3:: Die Vorschubrichtung ändert sich wiederholt. Dieser Vorgang untergliedert sich in zwei Teilvorgänge. Die erste Teilnaht verläuft über den gesamten Sekundärbereich 10 am Anfang des zweiten Bauteiles 2. Die zweite Schweißnaht bildet eine der beiden äußeren Primärteilnähte 16 und beginnt an der gleichen Aussparung 3. Dabei sollte etwa die zweimalige Schmelzbadlänge überschweißt werden.
- Sequenz 4:: Bis auf Ort und umgekehrter Schweißrichtung entspricht dieser Schweißvorgang dem der Sequenz 3, wo hier der Teil der Sekundärnaht 14 im Bereich der Aussparung 4 verschweißt wird.

Es ist somit festzuhalten, dass durch die Einbringung von Aussparungen 3, 4 innerhalb des zweiten Bauteiles 2, das beispielsweise ein Stringer für den Verbund eines Hautbleches (erstes Bauteil 1) bilden kann, eine Reduzierung der Kerbspannungen in dem Schnittpunkt P herbeigeführt und gleichzeitig innerhalb des Schnittpunktes P die Steigerung der Heißrissresistenz bewirkt wird.

Für die Auslegung der zu verbindenden Bauteile 1 und 2 und der damit verbundenen Prozessgestaltung können unter Berücksichtigung der Bedingungen, beispielsweise im Flugbetrieb und während des Schweißvorganges folgende Aussagen grundlegend getroffen werden. Die Breite und Höhe der Aussparungen sollten so klein wie möglich gewählt werden, damit während der Flugphase die Kerbspannungen im Schnittpunkt P so gering bleiben wie möglich, und wobei der Überlappungsgrad bei der Zugeigenspannungsgebiete nach einer zweiten Teilschweißung im Schnittpunkt P ansteigt. Dabei ist jedoch zu berücksichtigen, dass mit einer kleinen Aussparungshöhe h die Kerbspannungen im Schnittpunkt S ansteigen.

Die Länge des Sekundärbereiches 10 sollte so gewählt werden, dass von ihm ein möglichst großer Einfluss auf die Druckeigenspannungen im Schnittpunkt P ausgeht. Andererseits sollte im Falle des erlaubten Versagens des Sekundärbereiches 10 der resultierende Hebelarm nicht zu lang werden, dass die dadurch entstehenden Kerbspannungen im Schnittpunkt P während der Flugphase ansteigen würden. Der Hebelarm resultiert aus der Anbindung der Länge des Endbereiches 5, 6 und dem zweiten Bauteil 2.

Letztendlich üben einen großen Einfluss die Schweißrichtungen auf das Heißrissverhalten aus. Doch nur bei der inneren Primärnaht 15 kann dieser Einfluss ausgenutzt werden. Indessen müssen Nahtausläufe wegen der Kraterendbildung an den Außenkanten der Sekundär- und äußeren Primärbereiche durch eine geeignete Schweißfolge vermieden werden. Die Nahtausläufe sollten in die nicht oder weniger kerbbeanspruchte Zone der Stringerbereiche und damit des Bauteiles 2 gelegt werden.

### Bezugszeichenliste

- 1.: Erstes Bauteil
- 2.: Zweites Bauteil
- 3.: Aussparung
- 4.: Aussparung
- 5.: Endbereich
- 6.: Endbereich
- 7.: Bauteilmitte
- 8.: Heftnaht
- 9.: Brücke
- 10.: Sekundärbereich
- 11.: Äußerer Primärbereich
- 12.: Innerer Primärbereich
- 13.: Schweißnaht
- 14.: Sekundärnaht
- 15.: Innere Primärteilnaht
- 16.: Äußere Primärteilnaht
- A: Schweißrichtung
- B: Schweißrichtung
- C: Schweißrichtung
- D: Schweißrichtung
- F: Punkt
- P: Schnittpunkt
- Pv: Schnittpunktkante
- S: Schnittpunkt
- S_{eq}1: erste Sequenz
- S_{eq}2: zweite Sequenz
- S_{eq}3: dritte Sequenz
- S_{eq}4: vierte Sequenz
- d: Abstand
- e: zweifache Schmelzbadlänge
- h: Aussparungshöhe
- I: Aussparungsbreite
- Iₛ: Länge Sekundärbereich

## Patentansprüche

1. Schweißverbindung zwischen einem ersten Bauteil - Hautblech (1) - und einem in Längsrichtung des Hautblechs (1) verlaufenden und einer Längsversteifung des Hautblechs (1) dienenden zweiten Bauteil (2) - Stringer -, wobei das Hautblech (1) und der Stringer (2) senkrecht zueinander angeordnet und miteinander verschweißt sind, wobei der Stringer (2) jeweils in seinen Endbereichen (5, 6) eine im Bezug zum Hautblech (1) ausgerichtete Aussparung (3, 4) aufweist, **dadurch gekennzeichnet dass** der Stringer (2) mittels nur dreier, durch die beiden Aussparungen (3, 4) separierte, Schweißnähte mit dem Hautblech (1) verbunden ist dass das Hautblech (1) ein aus Aluminium hergestelltes Hautblech (1) eines Rumpfbereiches ist.

2. Schweißverbindung nach Anspruch 1, **dadurch gekennzeichnet, dass** der Stringer (2) beidseitig mit dem Hautblech (1) verschweißt ist.

3. Schweißverbindung nach Anspruch 1 oder 2, **dadurch gekennzeichnet, dass** das Hautblech (1) mit dem Stringer (2) durch Heftnähte (8) bzw. Steppheftnähte positioniert ist.

4. Schweißverbindung nach einem der vorhergehenden Ansprüche, **dadurch gekennzeichnet, dass** das Hautblech (1) mit dem Stringer (2) zwischen den Aussparungen (3, 4) durch, von der Mitte (7) des Stringers (2) ausgehenden inneren Primärteilnähten (15) verschweißt ist, die in einem Abstand (e) vor den inneren Kanten der Aussparungen (3, 4) enden, und dass die Abstände (e) auf jeder Seite durch äußere Primärteilnähte (16) verschweißt sind, und dass die Endbereiche (5, 6) des Stringers (2) bis zu den Anfängen der Aussparungen (3, 4) jeweils durch eine Schweißnaht (14) verbunden sind.

5. Schweißverbindung nach einem der vorhergehenden Ansprüche, **dadurch gekennzeichnet, dass** die Aussparungsbreite I und die Aussparungshöhe h einen Minimalwert aufweist, der jedoch größer ist als eine von den Schweißnahtradien ausgehenden Kerbwirkung.

## Claims

1. Welded connection between a first component - skin panel (1) - and a second component (2) - stringer - which extends in the longitudinal direction of the skin panel (1) and serves to longitudinally reinforce the skin panel (1), wherein the skin panel (1) and the stringer (2) are arranged perpendicularly to one another and are welded together, wherein the stringer (2) has, in each of its end regions (5, 6), a cutout (3, 4) oriented with respect to the skin panel (1), **characterized in that** the stringer (2) is connected to the skin panel (1) by means of only three weld seams which are separated by the two cutouts (3, 4), and **in that** the skin panel (1) is an aluminium skin panel (1) of a fuselage region.

2. Welded connection according to Claim 1, **characterized in that** the stringer (2) is welded on both sides to the skin panel (1).

3. Welded connection according to Claim 1 or 2, **characterized in that** the skin panel (1) is positioned with the stringer (2) by basted seams (8) or stitched seams.

4. Welded connection according to one of the preceding claims, **characterized in that** the skin panel (1) is welded to the stringer (2) between the cutouts (3, 4) by inner primary part seams (15) that start from the centre (7) of the stringer (2) and end at a spacing (e) before the inner edges of the cutouts (3, 4), and **in that** the spacings (e) on each side are welded by outer primary part seams (16), and **in that** the end regions (5, 6) of the stringer (2) are each connected by a weld seam (14) as far as the starts of the cutouts (3, 4).

5. Welded connection according to one of the preceding claims, **characterized in that** the cutout width I and the cutout height h have a minimum value, which is, however, greater than a notch effect proceeding from the weld seam radii.

## Revendications

1. Liaison soudée entre un premier composant, à savoir une tôle extérieure (1) et un deuxième composant (2), à savoir un renfort qui s'étend dans le sens de la longueur de la tôle extérieure (1) et qui sert à rigidifier longitudinalement la tôle extérieure (1),
la tôle extérieure (1) et le renfort (2) étant disposés orthogonalement l'un par rapport à l'autre et étant soudés l'un à l'autre, le renfort (2) présentant dans chacune de ses parties d'extrémité (5, 6) une découpe (3, 4) tournée vers la tôle extérieure (1), **caractérisée en ce que**
le renfort (2) n'est relié à la tôle extérieure (1) que par trois cordons de soudure séparés par les deux découpes (3, 4) et
**en ce que** la tôle extérieure (1) est une tôle extérieure (1) réalisée en aluminium pour la partie arrière d_{'}un véhicule.

2. Liaison soudée selon la revendication 1, **caractérisée en ce que** le renfort (2) est soudé sur ses deux côtés à la tôle extérieure (1).

3. Liaison soudée selon les revendications 1 ou 2, **caractérisée en ce que** la tôle extérieure (1) est positionnée par rapport au renfort (2) par des cordons de pointage (8) ou des lignes de soudage par points.

4. Liaison soudée selon l'une des revendications précédentes, **caractérisée en ce que** la tôle extérieure (1) est soudée au renfort (2) entre les découpes (3, 4) par des cordons partiels primaires intérieurs (15) qui partent du milieu (7) du renfort (2) et qui se terminent à une distance (e) en avant du chant intérieur des découpes (3, 4) et **en ce que** les distances (e) sur chaque côté sont soudées par des cordons partiels primaires extérieurs (16) et **en ce que** les parties d'extrémité (5, 6) du renfort (2) sont chacune reliée par un cordon de soudure (14) qui s'étend jusqu'au début des découpes (3, 4).

5. Liaison soudée selon l'une des revendications précédentes, **caractérisée en ce que** la largeur 1 des découpes et la hauteur h des découpes présentent une valeur minimale mais supérieure à un effet d'entaille partant du rayon des cordons de soudure.
